# EUROPÄISCHE PATENTSCHRIFT

(11) **EP 3 428 594 B1**
(45) Veröffentlichungstag und Bekanntmachung des Hinweises auf die Patenterteilung: **11.08.2021**
(21) Anmeldenummer: 18169765.7
(22) Anmeldetag: 27.04.2018
(51) Int. Cl.: G01K 15/00

(54) **KALIBRIERHÜLSE FÜR EINEN BLOCKKALIBRATOR ZUR KALIBRIERUNG EINES TEMPERATURSENSORS SOWIE BLOCKKALIBRATOR MIT EINER SOLCHEN KALIBRIERHÜLSE**
CALIBRATION SLEEVE FOR A BLOCK CALIBRATOR FOR CALIBRATION OF A TEMPERATURE SENSOR AND BLOCK CALIBRATOR WITH SUCH A CALIBRATION SLEEVE
MANCHON DE CALIBRAGE POUR UN CALIBRATEUR À BLOC DESTINÉ À L'ÉTALONNAGE D'UN CAPTEUR DE TEMPÉRATURE AINSI QUE CALIBRATEUR À BLOC POURVU D'UN TEL MANCHON DE CALIBRAGE

(30) Priorität: 11.07.2017 DE 102017115491
(43) Veröffentlichungstag der Anmeldung: 16.01.2019
(73) Patentinhaber: SIKA Dr.Siebert & Kühn GmbH & Co. KG., 34260 Kaufungen (DE)
(72) Erfinder: FRIEDRICHS, René Dr., 37075 Göttingen (DE); SCHMIDT, Sergius Dipl.-Ing., 34128 Kassel (DE); TRINTER, Frank Dr.-Ing., 34260 Kaufungen (DE)
(74) Vertreter: Patentanwälte Walther Hinz Bayer PartGmbB

(56) Entgegenhaltungen:
- GB-A- 2 435 691
- JP-A- 2007 248 277
- US-A1- 2008 013 591

## Beschreibung

Die Erfindung betrifft eine Kalibrierhülse für einen Blockkalibrator zur Kalibrierung eines Temperatursensors sowie einen Blockkalibrator mit einer solchen Kalibrierhülse, wobei die Kalibrierhülse wenigstens eine Sensorbohrung aufweist, in die entlang einer Längsrichtung der Temperatursensor einsetzbar ist.

### STAND DER TECHNIK

Beispielsweise offenbart die DE 10 2008 034 361 B4 einen Blockkalibrator zur Kalibrierung eines Temperatursensors mit einem Heizblock, in dem Heizmittel angeordnet sind, um den Heizblock auf eine vorgegebene Temperatur zu bringen. Im Heizblock ist ein Aufnahmeloch eingebracht, in das die Kalibrierhülse eingesetzt werden kann, und die Kalibrierhülse besitzt eine Sensorbohrung, in die ein als Prüfling dienender Temperatursensor eingeführt werden kann. Die Kalibrierhülse ist einteilig ausgebildet und in Längsrichtung der Kalibrierhülse kann ein Wärmestrom stattfinden, der zu Temperaturinhomogenitäten auch innerhalb des Kalibrierbereiches der Kalibrierhülse führt. Der Kalibrierbereich ist dabei jener in Längsrichtung ausgebildete Bereich, über den der Temperatursensor eine Temperatur messen kann, wenn dieser in der Kalibrierhülse eingebracht ist. Damit bildet der Kalibrierbereich einen Abschnitt der Kalibrierhülse in Längsrichtung und je gleichmäßiger die Temperatur in der Kalibrierhülse über den Kalibrierbereich verteilt ist, desto genauer kann der Temperatursensor kalibriert werden.

Die WO 2010/040360 A1 offenbart einen Blockkalibrator zur Aufnahme einer Kalibrierhülse, in der ein Temperatursensor kalibriert werden kann. Um die Kalibriergenauigkeit zu erhöhen, sind mehrere Heizelemente vorgesehen, die in den Heizblock eingebracht sind und eine möglichst homogene Temperaturverteilung im Heizblock erzeugen sollen. Zusätzlich sind mehrere Temperatursensoren im Heizblock eingebracht, mit denen ein Temperaturprofil im Heizblock erkannt werden kann, um die Temperatur im Heizblock möglichst homogen einzustellen. Damit ergibt sich ein erheblicher baulicher Aufwand zur Bereitstellung eines genau kalibrierenden Blockkalibrators, der zu hohen Herstellungskosten führt.

Die GB 2 435 691 A offenbart eine Kalibrierhülse für einen Blockkalibrator zur Kalibrierung eines Temperatursensors in Form von Einfügungsrohren, durch die die Temperaturmessfühler eingeführt werden können, um schließlich in eine Kalibrierhülse zu gelangen. Die Kalibrierhülse ist einteilig ausgeführt und als Block ausgebildet, und die Einführrohre münden in die Aufnahmebohrungen zur Aufnahme der Temperatursensoren in der Kalibrierhülse.

Druckschrift JP 2007 248 277 A zeigt Temperaturfühler mit entsprechend langen Schäften, mit denen diese in einen Kalibrierblock eingesetzt werden können, und dieser befindet sich in einem Flüssiggemisch, das beispielsweise durch flüssigen Stickstoff oder flüssigen Sauerstoff gebildet ist.

Schließlich zeigt die US 2008/0013591 A1 eine Kalibrierhülse für einen Blockkalibrator zur Kalibrierung eines Temperatursensors, und die Kalibrierhülse ist zylinderförmig ausgebildet und weist eine Sensorbohrung auf, die entlang einer Längsrichtung der Temperatursensoren eingesetzt werden kann.

### OFFENBARUNG DER ERFINDUNG

Aufgabe der Erfindung ist die Weiterbildung einer Kalibrierhülse und eines Blockkalibrators, sodass die Kalibrierhülse im Betrieb möglichst eine geringe Temperaturinhomogenität aufweist. Insbesondere soll in der Kalibrierhülse ein Kalibrierabschnitt mit einer besonders hohen Temperaturhomogenität geschaffen werden. Diese Aufgabe wird ausgehend von einer Kalibrierhülse gemäß Anspruch 1 und ausgehend von einem Blockkalibrator gemäß Anspruch 9 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass der Körper der Kalibrierhülse wenigstens zwei Abschnitte mit sich unterscheidenden Wärmeleitfähigkeiten aufweist, wobei ein erster Abschnitt mit einer höheren Wärmeleitfähigkeit einen Kalibrierabschnitt bildet und dass ein zweiter Abschnitt sich in Längsrichtung an den Kalibrierabschnitt anschließt und einen Anschlussabschnitt bildet, der eine geringere Wärmeleitfähigkeit aufweist und/oder der aus einem Werkstoff mit einer geringeren Wärmeleitfähigkeit ausgebildet ist.

Der Grundgedanke der Erfindung ist die Ausbildung der Kalibrierhülse mit Abschnitten unterschiedlicher Wärmeleitfähigkeiten, so dass ein erster Abschnitt mit einer hohen Leitfähigkeit geschaffen werden kann, in dem sich darauf basierend eine hohe Temperaturhomogenität ergibt, und es wird wenigstens ein zweiter Abschnitt geschaffen, in dem eine niedrige Wärmeleitfähigkeit vorherrscht, um eine Entwärmung, insbesondere eine einseitige oder asymmetrische Entwärmung des ersten Abschnittes mit der hohen Wärmeleitfähigkeit vermieden wird.

Insbesondere ist es der Gedanke der Erfindung, dass der Körper der Kalibrierhülse einen ersten Abschnitt mit einem Werkstoff einer ersten insbesondere hohen Leitfähigkeit und wenigstens einen zweiten Abschnitt mit einem Werkstoff einer zweiten insbesondere niedrigen Leitfähigkeit aufweist. Dabei kann der erste Abschnitt mit der höheren Leitfähigkeit einen Kalibrierabschnitt bilden und der zweite Abschnitt schließt sich in Längsrichtung an den Kalibrierabschnitt an und bildet einen Anschlussabschnitt, der eine geringere Leitfähigkeit aufweist und/oder der aus einem Werkstoff mit einer geringeren Wärmeleitfähigkeit ausgebildet ist.

Der Werkstoff der höheren Wärmeleitfähigkeit und der Werkstoff der niedrigeren Leitfähigkeit können unterschiedliche chemische Grundelemente umfassen, wobei auch denkbar ist, dass ein identischer Werkstoff für die unterschiedlichen Wärmeleitfähigkeiten in unterschiedlicher Herstellungsweise bereitgestellt wird. Beispielsweise kann ein Abschnitt mit der hohen Wärmeleitfähigkeit aus einem metallischen Vollmaterial gebildet werden, beispielsweise hergestellt im Guss- oder Pressverfahren, und der Abschnitt mit der niedrigen Wärmeleitfähigkeit kann ein identisches Material aufweisen, jedoch basierend auf einer differierenden Herstellungsweise. Beispielsweise besteht die Möglichkeit, einen Abschnitt mit einer geringeren Wärmeleitfähigkeit aus einem Metallschaum herzustellen oder Herstellungsweisen zu nutzen, die eine geringere Dichte bei ansonsten gleicher chemischer Zusammensetzung des Werkstoffes ermöglichen. Wird beispielsweise ein erster Abschnitt einer hohen Wärmeleitfähigkeit aus einem Vollmaterial auf konventionelle Weise bereitgestellt, so kann sich an diesen ersten Abschnitt ein zweiter Abschnitt anschließen, der mittels eines Metallschaums gebildet wird oder der aus einem Werkstoff mit einem Verfahren bspw. des selektiven Lasersinterns hergestellt ist. Somit können sowohl der Kalibrierabschnitt als auch der Anschlussabschnitt einen identischen Werkstoff aufweisen, die Abschnitte sind jedoch durch unterschiedliche Wärmeleitfähigkeiten gekennzeichnet.

Eine vorteilhafte Ausgestaltung der Kalibrierhülse sieht vor, dass der Werkstoff zur Bildung des Kalibrierabschnittes Aluminium und/oder wenigstens eine Aluminiumlegierung und/oder Kupfer umfasst und/oder dass der Werkstoff zur Bildung des Anschlussabschnittes wenigstens teilweise Stahl und/oder Edelstahl umfasst.

Insbesondere kann es vorgesehen sein, dass der Anschlussabschnitt der Kalibrierhülse wenigstens eine Aussparung umfasst, die mit Luft gefüllt oder evakuiert ist. Der Abschnitt mit der geringeren Wärmeleitfähigkeit kann folglich auch durch einen Luftabschnitt oder einen evakuierten Abschnitt gebildet sein, wobei die Gesamtmenge der Kalibrierhülse, innerhalb der sich die Abschnitte der unterschiedlichen Wärmeleitfähigkeiten ergeben, in Längsrichtung gesehen jeweils mit einem Festkörperabschnitt abschließt. Freimachungen im Bodenbereich oder ein Aufnahmeloch im oberen Bereich der Kalibrierhülse zur Aufnahme wenigstens eines Temperatursensors sind bei den unterschiedlich ausgebildeten Wärmeleitfähigkeiten im Sinne der Erfindung nicht mit umfasst. Insbesondere schließt die Kalibrierhülse sowohl bodenseitig als auch oberseitig jeweils mit einem Festkörperabschnitt ab, wobei erst zwischen dem bodenseitigen und dem oberseitigen Abschluss die Bereiche mit den unterschiedlichen Wärmeleitfähigkeiten ausgebildet sind, wobei der bodenseitige und der oberseitige Abschluss durch einen Festkörper der Kalibrierhülse gebildet ist und nicht etwa durch eine luftgefüllte Freimachung.

Um eine möglichst homogene Temperatur innerhalb des Kalibrierabschnittes zu schaffen, ist mit weiterem Vorteil vorgesehen, dass mit Bezug auf die Längsrichtung der Kalibrierhülse beidseitig des Kalibrierabschnittes jeweils ein Abschnitt mit einer geringeren Wärmeleitfähigkeit ausgebildet ist. Mit anderen Worten bildet der Kalibrierabschnitt nicht einen unteren Teil der Kalibrierhülse, der bodenseitig im Aufnahmeloch des Blockkalibrators aufsteht, da dadurch wiederum eine asymmetrische Entwärmung des Kalibrierabschnittes die Folge wäre. Vielmehr schließt sich bodenseitig an den Kalibrierabschnitt wenigstens ein Anschlussabschnitt mit einer niedrigeren Wärmeleitfähigkeit an. Selbiges gilt in Richtung zur Oberseite der Kalibrierhülse, in welche Richtung sich ein wesentlicher Anschlussabschnitt an den Kalibrierabschnitt anschließt, welcher Anschlussabschnitt die geringere Wärmeleitfähigkeit aufweist. Eine Entwärmung des Kalibrierabschnittes in Richtung zur Öffnungsseite der Sensorbohrung wird folglich minimiert.

Der Körper der Kalibrierhülse ist vorzugsweise zylinderförmig ausgebildet, wobei der Körper Zylinderabschnitte aufweisen kann, die mit unterschiedlichen Durchmessern gebildet sind. Insbesondere ist es von Vorteil, dass der Körper der Kalibrierhülse im Kalibrierabschnitt einen geringeren Durchmesser aufweist als in wenigstens einen Anschlussabschnitt. Das Aufnahmeloch im Heizblock des Blockkalibrators ist in an sich bekannter Weise zylindrisch ausgebildet und weist einen gleichmäßigen Durchmesser auf, und wenn die Kalibrierhülse wenigstens im Kalibrierabschnitt mit einem geringeren Durchmesser ausgebildet ist, entsteht ein umlaufender Ringspalt zwischen dem Kalibrierabschnitt und dem Aufnahmeloch. Mit dem Ringspalt geht ein geringerer Wärmeübergang vom Heizblock auf die Kalibrierhülse einher, wodurch die Temperaturhomogenität insbesondere über der Länge des Kalibrierabschnittes in Längsrichtung der Kalibrierhülse weiter verbessert wird.

In einer bevorzugten Ausführungsform ist die Kalibrierhülse aus mehreren Zylinderabschnitten ausgebildet, die durch Vollmaterial gebildet sind und miteinander verbunden werden müssen. Folglich kann es vorgesehen sein, dass der Kalibrierabschnitt und der Anschlussabschnitt mittels einer Gewindeverbindung oder mittels eines Pressverbands miteinander verbunden sind. Auch ist es denkbar, dass der Kalibrierabschnitt und der Anschlussabschnitt mittels wenigstens eines Schraubelementes oder mittels eines plastisch verformten Materialbereiches wenigstens einer der Werkstoffe miteinander verbunden sind. Ein weiterer Vorteil entsteht durch eine Isolierschicht zwischen dem Kalibrierabschnitt und dem Anschlussabschnitt, beispielsweise in Form einer Keramikplatte oder dergleichen.

Die Erfindung richtet sich weiterhin auf einen Blockkalibrator zur Kalibrierung eines Temperatursensors, aufweisend einen Heizblock, an oder in dem wenigstens ein Heizmittel angeordnet, und wobei der Heizblock ein Aufnahmeloch aufweist, in dem eine zylinderförmige Kalibrierhülse aufgenommen ist, wobei die Kalibrierhülse wenigstens eine Sensorbohrung aufweist, in die entlang einer Längsrichtung der Temperatursensor einsetzbar ist. Erfindungsgemäß weist der Körper der Kalibrierhülse wenigstens zwei Abschnitte mit sich unterscheidenden Wärmeleitfähigkeiten auf. Die weiteren Merkmale und zugeordneten Vorteile, die voranstehend in Zusammenhang mit der Kalibrierhülse aufgeführt sind, finden für den Blockkalibrator mit einer solchen Kalibrierhülse ebenfalls Anwendung.

Insbesondere ist der Blockkalibrator und im Speziellen das Aufnahmeloch so ausgebildet, dass bei einer in das Aufnahmeloch eingesetzten Kalibrierhülse der Kalibrierabschnitt mit Bezug auf die Längsrichtung mit der Anordnung des Heizmittels korrespondiert. Das heißt, dass das Heizmittel in Längsrichtung eine Höhe aufweist, die beginnt und die abschließt mit der Höhe des Kalibrierabschnittes.

### BEVORZUGTES AUSFÜHRUNGSBEISPIEL DER ERFINDUNG

Weitere, die Erfindung verbessernden Maßnahmen werden nachstehend gemeinsam mit der Beschreibung eines bevorzugten Ausführungsbeispiels der Erfindung anhand der Figuren näher dargestellt. Es zeigt:
- Figur 1: Eine Gesamtansicht eines Blockkalibrators mit einer erfindungsgemäß ausgebildeten Kalibrierhülse,
- Figur 2: eine Kalibrierhülse mit einer Schraubverbindung zwischen einem Kalibrierabschnitt und einem Anschlussabschnitt,
- Figur 3: eine Kalibrierhülse mit einem Pressverband zwischen dem Kalibrierabschnitt und dem Anschlussabschnitt,
- Figur 4: eine Kalibrierhülse mit einem plastisch verformten Materialbereich zur Bildung eines Formschlusses zwischen dem Kalibrierabschnitt und dem Anschlussabschnitt,
- Figur 5: eine Kalibrierhülse mit einem Schraubelement zur Verbindung des Kalibrierabschnittes und des Abschlussabschnittes,
- Figur 6: eine weitere Ausführungsform einer Kalibrierhülse mit beidseitig zum Kalibrierabschnitt angeordneten Anschlussabschnitten und
- Figur 7: ein weiteres Ausführungsbeispiel einer Kalibrierhülse mit Plattenelementen zur Bildung von Anschlussabschnitten.

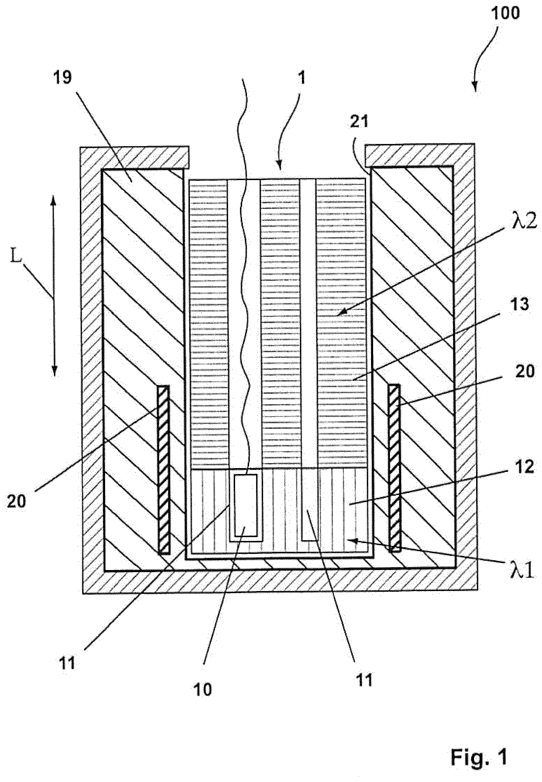

Figur 1 zeigt in schematisierter Darstellung einen Blockkalibrator 100 in einem Querschnitt. Der Blockkalibrator 100 weist als Grundkörper einen Heizblock 19 auf, und in dem Heizblock 19 ist ein Aufnahmeloch 21 eingebracht, in das eine Kalibrierhülse 1 eingesetzt ist. Das Aufnahmeloch 21 ist als Bohrung ausgeführt, ohne dass die Herstellung des Aufnahmeloches 21 mittels eines Bohrverfahrens erzeugt werden muss, und das Aufnahmeloch 21 weist einen Bodenbereich auf, der das Aufnahmeloch 21 in einer Längsrichtung L des Aufnahmeloches 21 nach unten abschließt. In das Aufnahmeloch 21 ist die Kalibrierhülse 1 so eingesetzt, dass diese bodenseitig aufsteht oder durch entsprechende Mittel beabstandet zur Bodenfläche gehalten ist. Gleiches gilt in radialer Richtung, so dass lediglich beispielhaft ein umlaufender Spalt zwischen der Kalibrierhülse 1 und dem Aufnahmeloch 21 dargestellt ist.

Das Ausführungsbeispiel zeigt die Kalibrierhülse 1 in einer Zylinderform, und von der Oberseite beginnend sind in die Kalibrierhülse 1 zwei Sensorbohrungen 11 eingebracht, wobei in der linken Sensorbohrung 11 ein Temperatursensor 10 eingesetzt ist. In die rechte Sensorbohrung 11 kann beispielsweise ein nicht dargestellter Referenzsensor eingesetzt werden.

Im Heizblock 19 ist beispielhaft ein Heizmittel 20 angeordnet, und das Heizmittel 20 kann gebildet sein durch eine Heizmanschette, die das Aufnahmeloch 21 im bodennahen unteren Bereich hülsenförmig umschließt. Wird das Heizmittel 20 eingeschaltet, so heizt dieses den Heizblock 19 auf, und die Wärme wird vom Heizblock 19 auf die Kalibrierhülse 1 und folglich auch auf den Temperatursensor 10 übertragen.

Gemäß der Erfindung weist der Körper der Kalibrierhülse 1 wenigstens zwei Abschnitte mit sich unterscheidenden Wärmeleitfähigkeiten λ1 und λ2 auf. Der Körper besitzt dabei einen ersten Abschnitt, der einen Kalibrierabschnitt 12 bildet, und der Kalibrierabschnitt besitzt eine höhere Leitfähigkeit λ1 als ein weiterer Abschnitt, der als Anschlussabschnitt 13 ausgebildet ist. λ1 ist damit größer als λ2.

Wird nunmehr das Heizmittel 20 eingeschaltet und heizt die Kalibrierhülse auf, so kann der Kalibrierabschnitt 12 eine im Wesentlichen homogene Temperatur ausbilden, so dass sich ein minimaler oder kein Temperaturgradient ergibt in Längsrichtung L. Durch die geringere Wärmeleitfähigkeit λ2 des Anschlussabschnittes 13 erfolgt eine geringere Wärmeabfuhr, und durch die geringere Wärmeabfuhr stellt sich über der Höhe des Kalibrierabschnittes 12 in Längsrichtung L eine im Wesentlichen gleichförmige Temperatur ein. Dadurch werden Messfehler verringert, insbesondere dann, wenn der Temperatursensor 10 über einen größeren Längsabschnitt Temperaturen sensiert.

Der Kalibrierabschnitt 12 ist aus einem ersten Werkstoff mit einer höheren Wärmeleitfähigkeit λ1 ausgebildet, und der Anschlussabschnitt 13 ist aus einem Material mit einer geringeren Wärmeleitfähigkeit λ2 ausgebildet. Beispielsweise weist der Kalibrierabschnitt 12 ein Aluminium auf, und der Anschlussabschnitt 13 weist einen Edelstahl auf. Die beiden Abschnitte 12 und 13 können jeweilige Zylinderkörper bilden, die miteinander verbunden sind, so dass sich in Längsrichtung L der Anschlussabschnitt 13 in Bezug auf das Aufnahmeloch 21 nach oben hin, d.h. in Richtung zur Öffnung des Aufnahmeloches 21, an den Kalibrierabschnitt 12 anschließt.

Der Grundgedanke der Erfindung liegt darin, dass der Anschlussabschnitt 13 der geringeren Leitfähigkeit λ2 den Kalibrierabschnitt 12 innerhalb des Aufnahmeloches 21 gewissermaßen isoliert. Durch die geringere Wärmeleitfähigkeit λ2 führt die offene Stirnseite des Anschlussabschnittes 13 in der Öffnung des Aufnahmeloches 21 zu einem geringeren durch Konvektion verursachten Wärmeabfluss, und als Folge stellt sich innerhalb des Volumens des Kalibrierabschnittes 12 eine konstantere Temperatur ein.

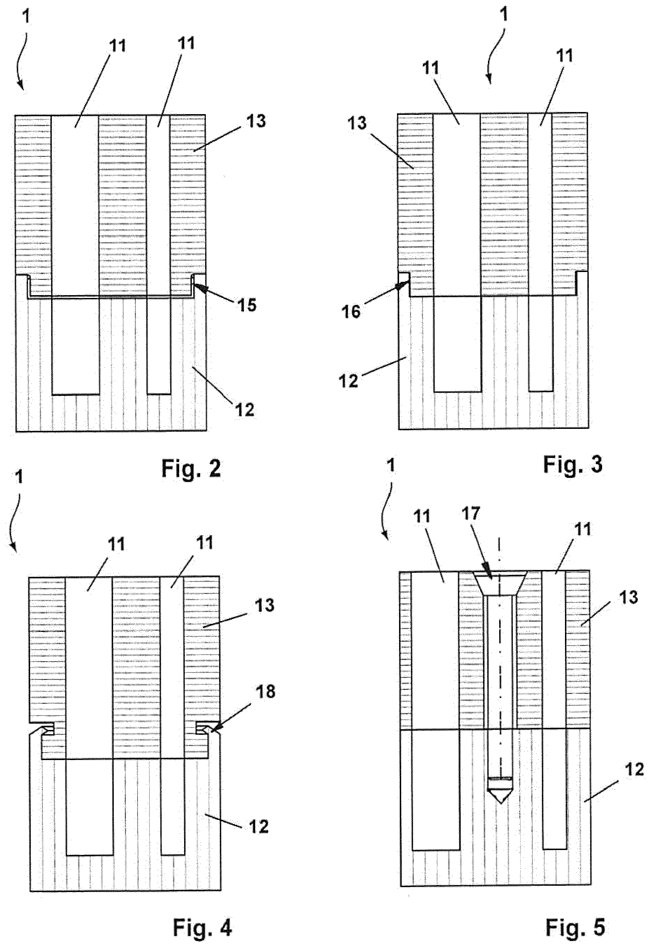

Die Figuren 2, 3, 4 und 5 zeigen verschiedene Ausführungsformen der Kalibrierhülse 1 mit einem unterseitigen Kalibrierbereich 12 und einen sich oberseitig anschließenden Anschlussabschnitt 13, wobei die Abschnitte 12 und 13 mit Sensorbohrungen 11 durchwandert sind. In die Sensorbohrungen 11 können Temperatursensoren 10 gemäß Figur 1 eingesetzt werden, wobei der messende Abschnitt des Temperatursensors 10 im eingesetzten Zustand innerhalb des Kalibrierabschnittes 12 angeordnet ist.

Figur 2 zeigt eine Verbindung zwischen dem Kalibrierabschnitt 12 und dem Anschlussabschnitt 13 in Form einer Gewindeverbindung 15, und hierfür weist der Kalibrierabschnitt 12 einen Kragen auf, der einen Abschnitt des Anschlussabschnittes 13 mit reduziertem Durchmesser übergreift. In dem übergreifenden Abschnitt ist die Gewindeverbindung 15 ausgebildet, so dass der Kalibrierabschnitt 12 und der Anschlussabschnitt 13 miteinander verschraubt werden können. Dabei kann die Herstellung der Kalibrierhülse so erfolgen, dass im zusammengeschraubten Zustand der Abschnitte 12 und 13 anschließend erst die Sensorbohrungen 11 eingebracht werden.

Figur 3 zeigt eine Verbindung zwischen dem Kalibrierabschnitt 12 und dem Anschlussabschnitt 13 in Form eines Pressverbandes 16, so dass ein Abschnitt des Anschlussabschnittes 13 in einen Kragen des Kalibrierabschnittes 12 innenseitig eingepresst ist.

Figur 4 stellt eine weitere Verbindungsform zwischen dem Kalibrierabschnitt 12 und dem Anschlussabschnitt 13 in Gestalt eines plastisch verformten Materialbereiches 18 dar, die eine formschlüssige Verbindung bildet. Der Materialbereich 18 kann im Rollierverfahren in eine zugeordnete Geometrie im Anschlussabschnitt 13 eingeformt werden, durch einen Rollier- oder Bördelvorgang.

Figur 5 zeigt schließlich eine Verbindung zwischen dem Kalibrierabschnitt 12 und dem Anschlussabschnitt 13, die mittels eines Schraubelementes 17 gebildet ist, welches in den Anschlussabschnitt 13 hineingeführt und im Kalibrierabschnitt 12 verschraubt ist.

Weitere Möglichkeiten bestehen in der Ausbildung einer stoffschlüssigen Verbindung zwischen dem Kalibrierabschnitt 12 und dem Anschlussabschnitt 13, sodass diese in der Fügezone miteinander verklebt, verlötet oder verschweißt werden können, sofern die Werkstoffauswahl des Kalibrierabschnittes 12 oder des Anschlussabschnittes 13 solche stoffschlüssigen Fügeverfahren ermöglichen.

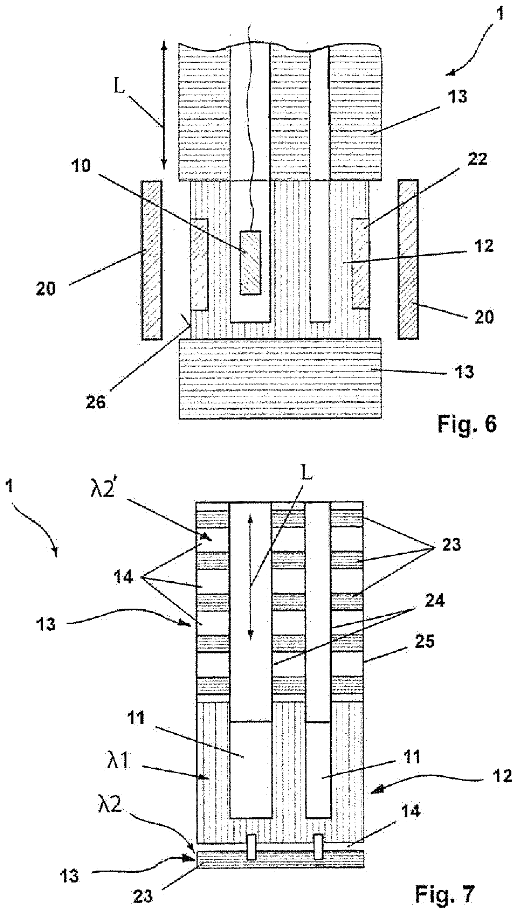

Figur 6 zeigt ein weiteres Ausführungsbeispiel einer Kalibrierhülse 1 mit einem Kalibrierabschnitt 12, in dem beispielhaft ein Temperatursensor 10 eingebracht ist. In Längsrichtung L schließt sich sowohl oberseitig als auch unterseitig des Kalibrierabschnittes 12 ein Anschlussabschnitt 13 an. Der Anschlussabschnitt 13 mit der geringeren Wärmeleitfähigkeit gegenüber dem Kalibrierabschnitt 12 führt somit zu einer beidseitigen Isolierung des Kalibrierabschnittes 12. Die Mantelfläche 26 des Kalibrierabschnittes 12 weist in Bezug auf die Anschlussabschnitte 13 einen reduzierten Durchmesser auf, und es sind weiterhin beispielhaft die Heizmittel 20 dargestellt, die eine Länge in Längsrichtung L aufweisen, die mit der Länge des Kalibrierabschnittes 12 in Längsrichtung L korrespondiert. In der Mantelfläche 26 ist eine Manschette 22 zur Isolierung eingebracht, und heizt das Heizmittel 20 durch einen radialen nach innen gerichteten Wärmefluss den Kalibrierabschnitt 12 auf, so kann sich durch die wärmeisolierende Manschette 22 insgesamt ein gleichmäßiges Temperaturprofil über der Längserstreckung der Längsrichtung L im Kalibrierabschnitt 12 ausbilden.

Figur 7 zeigt eine weitere alternative Ausgestaltung der Kalibrierhülse 1 mit einem Kalibrierabschnitt 12 und mit zwei Anschlussabschnitten 13, die sich in Längsrichtung L oberseitig und unterseitig an den Kalibrierabschnitt 12 anschließen. Die Anschlussabschnitte 13 sind aufgebaut aus Plattenelementen 23, zwischen denen Aussparungen 14 ausgebildet sind, die mit Luft gefüllt sind oder evakuiert werden können. Zur Evakuierung kann der Anschlussabschnitt 13 mit einer Hülle 25 ausgebildet sein, die evakuierbar ist und sodass die Aussparungen 14 luftleer sind. Folglich bildet sich in den Aussparungen 14 eine zweite Wärmeleitfähigkeit λ2' aus, welche Wärmeleitfähigkeit gebildet ist durch die Wärmeleitfähigkeit von Luft oder von einem Vakuum. Die Plattenelemente 23 können in der gezeigten Ausführungsform das gleiche Material aufweisen wie auch der Kalibrierabschnitt 12 oder die Plattenelemente 23 weisen einen Werkstoff auf mit einer geringeren Wärmeleitfähigkeit λ2 in Bezug auf die höhere Leitfähigkeit λ1 des Kalibrierabschnittes 12.

Zum Aufbau und zur haltenden Anordnung der Plattenelemente 23 sind beispielhaft Hülsen 24 gezeigt, die die Abschnitte der Sensorbohrungen 11 über der Höhe des Anschlussabschnittes 13 bilden. Die Hülsen 24 können beispielsweise abschnittsweise in die Sensorbohrungen 11 im Kalibrierabschnitt 12 eingepresst sein.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen können sowohl für sich als auch in den verschiedensten Kombinationen erfindungswesentlich sein.

### Bezugszeichenliste:

- 100: Blockkalibrator

- 1: Kalibrierhülse

- 10: Temperatursensor
- 11: Sensorbohrung
- 12: Kalibrierabschnitt
- 13: Anschlussabschnitt
- 14: Aussparung
- 15: Gewindeverbindung
- 16: Pressverband
- 17: Schraubelement
- 18: plastisch verformter Materialbereich
- 19: Heizblock
- 20: Heizmittel
- 21: Aufnahmeloch
- 22: Manschette
- 23: Plattenelement
- 24: Hülse
- 25: Hülle
- 26: Mantelfläche

- L: Längsrichtung
- λ1: erste Wärmeleitfähigkeit
- λ2: zweite Wärmeleitfähigkeit
- λ2': zweite Wärmeleitfähigkeit

## Patentansprüche

1. Kalibrierhülse (1) für einen Blockkalibrator (100) zur Kalibrierung eines Temperatursensors (10), wobei die Kalibrierhülse (1) zylinderförmig ausgebildet ist und wenigstens eine Sensorbohrung (11) aufweist, in die entlang einer Längsrichtung (L) der Temperatursensor (10) einsetzbar ist,
wobei der Körper der Kalibrierhülse (1) wenigstens zwei Abschnitte mit sich unterscheidenden Wärmeleitfähigkeiten (λ1, λ2, λ2') aufweist,
**dadurch gekennzeichnet**
**dass** ein erster Abschnitt mit einer höheren Wärmeleitfähigkeit (λ1) einen Kalibrierabschnitt (12) bildet und dass ein zweiter Abschnitt sich in Längsrichtung (L) an den Kalibrierabschnitt (12) anschließt und einen Anschlussabschnitt (13) bildet, der eine geringere Wärmeleitfähigkeit (λ2') aufweist und/oder der aus einem Werkstoff mit einer geringeren Wärmeleitfähigkeit (λ2) ausgebildet ist.

2. Kalibrierhülse (1) nach Anspruch 1,
**dadurch gekennzeichnet,**
**dass** der Körper der Kalibrierhülse (1) einen ersten Abschnitt mit einem Werkstoff einer ersten Wärmeleitfähigkeit (λ1) und wenigstens einen zweiten Abschnitt mit einem Werkstoff einer zweiten Wärmeleitfähigkeit (λ2, λ2') aufweist.

3. Kalibrierhülse (1) nach einem der Ansprüche 1 oder 2,
**dadurch gekennzeichnet,**
**dass** der Werkstoff zur Bildung des Kalibrierabschnittes (12) Aluminium und/oder Aluminiumlegierungen und/oder Kupfer umfasst und dass der Werkstoff des Anschlussabschnittes (13) wenigstens teilweise Stahl und/oder Edelstahl umfasst.

4. Kalibrierhülse (1) nach einem der Ansprüche 1 oder 3,
**dadurch gekennzeichnet,**
**dass** der Anschlussabschnitt (13) der Kalibrierhülse (1) wenigstens eine Aussparung (14) umfasst, die mit Luft gefüllt oder evakuiert ist.

5. Kalibrierhülse (1) nach einem der vorgenannten Ansprüche,
**dadurch gekennzeichnet,**
**dass** mit Bezug auf die Längsrichtung (L) der Kalibrierhülse (1) beidseitig des Kalibrierabschnittes (12) ein Abschnitt mit einer geringeren Wärmeleitfähigkeit (λ2, λ2') ausgebildet ist.

6. Kalibrierhülse (1) nach einem der Ansprüche 3 bis 5,
**dadurch gekennzeichnet,**
**dass** der Körper der Kalibrierhülse (1) zylinderförmig ausgebildet ist und im Kalibrierabschnitt (12) einen geringeren Durchmesser aufweist als im wenigstens einen Anschlussabschnitt (13).

7. Kalibrierhülse (1) nach einem der vorgenannten Ansprüche,
**dadurch gekennzeichnet,**
**dass** der Kalibrierabschnitt (12) und der Anschlussabschnitt (13) mittels einer Gewindeverbindung (15) oder mittels eines Pressverbandes (16) miteinander verbunden sind.

8. Kalibrierhülse (1) nach einem der Ansprüche 1 bis 7,
**dadurch gekennzeichnet,**
**dass** der Kalibrierabschnitt (12) und der Anschlussabschnitt (13) mittels wenigstens eines Schraubelementes (17) oder mittels eines plastisch verformten Materialbereiches (18) wenigstens einer der Werkstoffe miteinander verbunden sind.

9. Blockkalibrator (100) zur Kalibrierung eines Temperatursensors (10), aufweisend einen Heizblock (19), an oder in dem wenigstens ein Heizmittel (20) angeordnet ist, und wobei der Heizblock (19) ein Aufnahmeloch (21) aufweist, in dem eine zylinderförmige Kalibrierhülse (1) gemäß Anspruch 1 aufgenommen ist, wobei die Kalibrierhülse (1) wenigstens eine Sensorbohrung (11) aufweist, in die entlang einer Längsrichtung (L) der Temperatursensor (10) einsetzbar ist,
**dadurch gekennzeichnet,**
**dass** der zylinderförmige Körper der Kalibrierhülse (1) wenigstens zwei Abschnitte mit sich unterscheidenden Wärmeleitfähigkeiten (λ1, λ2, λ2') aufweist.

10. Blockkalibrator (100) nach Anspruch 9, wobei die Kalibrierhülse (1) ausgebildet ist nach einem der Ansprüche 1 bis 9.

11. Blockkalibrator (100) nach Anspruch 9 oder 10,
**dadurch gekennzeichnet,**
**dass** bei einer in das Aufnahmeloch (21) eingesetzten Kalibrierhülse (1) der Kalibrierabschnitt (12) mit Bezug auf die Längsrichtung (L) mit der Anordnung des Heizmittels (20) korrespondiert.

## Claims

1. A calibrator sleeve (1) for a block calibrator (100) for calibrating a temperature sensor (10), wherein the calibrator sleeve (1) is formed as cylindrical and has at least one sensor bore (11) into which the temperature sensor (10) is insertable along a longitudinal direction (L),
wherein
the body of the calibrator sleeve (1) has at least two sections having different thermal conductivities (λ1, λ2, λ2')
**characterized in that**
a first section having a higher thermal conductivity (λ1) forms a calibration section (12); and **in that** a second section adjoins the calibration section (12) in the longitudinal direction (L) and forms a connecting section (13) that has a lower thermal conductivity (λ2') and/or that is formed from a material having a lower thermal conductivity (λ2).

2. A calibrator sleeve (1) in accordance with claim 1,
**characterized in that**
the body of the calibrator sleeve (1) has a first section comprising a material of a first thermal conductivity (λ1) and at least one second section comprising a material of a second thermal conductivity (λ2, λ2').

3. A calibrator sleeve (1) in accordance with one of the claims 1 or 2,
**characterized in that**
the material for forming the calibration section (12) comprises aluminum and/or aluminum alloys and/or copper; and **in that** the material of the connecting section (13) at least partially comprises steel and/or stainless steel.

4. A calibrator sleeve (1) in accordance with one of the claims 1 or 3,
**characterized in that**
the connecting section (13) of the calibrator sleeve (1) comprises at least one cut-out (14) that is filled with air or evacuated.

5. A calibrator sleeve (1) in accordance with one of the preceding claims,
**characterized in that**
a section having a lower thermal conductivity (λ2, λ2') is formed at both sides of the calibration section (12) with respect to the longitudinal direction (L) of the calibrator sleeve (1).

6. A calibrator sleeve in accordance with one of the claims 3 to 5,
**characterized in that**
the body of the calibrator sleeve (1) is cylindrical and has a smaller diameter in the calibration section (12) than in the at least one connecting section (13).

7. A calibrator sleeve (1) in accordance with one of the preceding claims,
**characterized in that**
the calibration section (12) and the connecting section (13) are connected to one another by means of a threaded connection (15) or by means of an interference fit assembly (16).

8. A calibrator sleeve in accordance with one of the claims 1 to 7,
**characterized in that**
the calibration section (12) and the connecting section (13) are connected to one another by means of at least one screw element (17) or by means of a plastically deformed material section (18) of at least one of the materials.

9. A block calibrator (100) for calibrating a temperature sensor (10) comprising a heating block (19) at or in which at least one heating means (20) is arranged, and wherein the heating block (19) has a reception hole (21) in which a cylindrical calibrator sleeve (1) in accordance with claim 1 is received, with the calibrator sleeve (1) having at least one sensor bore (11) into which the temperature sensor (10) is insertable along a longitudinal direction (L),
**characterized in that**
the cylindrical body of the calibrator sleeve (1) has at least two sections having different thermal conductivities (λ1, λ2, λ2').

10. A block calibrator (100) in accordance with claim 9, wherein the calibrator sleeve (1) is formed in accordance with one of the claims 1 to 9.

11. A block calibrator (100) in accordance with claim 9 or claim 10,
**characterized in that**
with a calibrator sleeve (1) inserted into the reception hole (21), the calibration section (12) corresponds to the arrangement of the heating means (20) with respect to the longitudinal direction (L).

## Revendications

1. Manchon de calibrage (1) pour un calibrateur à bloc (100) destiné à l'étalonnage d'un capteur de température (10), le manchon de calibrage (1) étant réalisé en forme de cylindre et comportant au moins un trou pour capteur (11), dans lequel le capteur de température (10) peut être inséré dans une direction longitudinale (L),
dans lequel
le corps du manchon de calibrage (1) comporte au moins deux parties avec des conductibilités thermiques (λ1, λ2, λ2') différentes,
**caractérisé en ce que**
une première partie avec une conductibilité thermique (λ1) supérieure forme une partie de calibrage (12) et **en ce qu'**une seconde partie suit la partie de calibrage (12) dans la direction longitudinale (L) et forme une partie de jonction (13), qui présente une conductibilité thermique (λ2') inférieure et/ou qui est réalisée en un matériau ayant une conductibilité thermique (λ2) inférieure.

2. Manchon de calibrage (1) selon la revendication 1,
**caractérisé en ce que**
le corps du manchon de calibrage (1) comporte une première partie avec un matériau ayant une première conductibilité thermique (λ1) et au moins une seconde partie avec un matériau ayant une seconde conductibilité thermique (λ2, λ2').

3. Manchon de calibrage (1) selon l'une des revendications 1 ou 2,
**caractérisé en ce que** le matériau destiné à former la partie de calibrage (12) comprend de l'aluminium et/ou des alliages d'aluminium et/ou du cuivre et **en ce que** le matériau de la partie de jonction (13) comprend au moins en partie de l'acier et/ou de l'acier spécial.

4. Manchon de calibrage (1) selon l'une des revendications 1 ou 3,
**caractérisé en ce que**
la partie de jonction (13) du manchon de calibrage (1) comprend au moins un évidement (14), qui est rempli d'air ou dont l'air est évacué.

5. Manchon de calibrage (1) selon l'une des revendications précédentes,
**caractérisé en ce que**
une partie avec une conductibilité thermique (λ2, λ2') inférieure est réalisée des deux côtés de la partie de calibrage (12) par rapport à la direction longitudinale (L).

6. Manchon de calibrage (1) selon l'une des revendications 3 à 5,
**caractérisé en ce que**
le corps du manchon de calibrage (1) est réalisé en forme de cylindre et présente, dans la partie de calibrage (12), un diamètre inférieur à celui de l'au moins une partie de jonction (13).

7. Manchon de calibrage (1) selon l'une des revendications précédentes,
**caractérisé en ce que**
la partie de calibrage (12) et la partie de jonction (13) sont reliées l'une à l'autre au moyen d'un assemblage par filetage (14) ou au moyen d'un joint à ajustement serré (16).

8. Manchon de calibrage (1) selon l'une des revendications 1 à 7,
**caractérisé en ce que**
la partie de calibrage (12) et la partie de jonction (13) sont reliées l'une à l'autre au moyen d'au moins un élément de vissage (17) ou au moyen d'une zone de matériau (18) ayant subi une déformation plastique d'au moins un des matériaux.

9. Calibrateur à bloc (100) destiné à l'étalonnage d'un capteur de température (10), comportant un bloc chauffant (19), sur ou dans lequel est disposé au moins un moyen chauffant (20), et le bloc chauffant (19) comportant un trou de réception (21), dans lequel est reçu un manchon de calibrage (1) cylindrique selon la revendication 1, le manchon de calibrage (1) comportant au moins un trou pour capteur (11), dans lequel le capteur de température (10) peut être inséré dans une direction longitudinale (L),
**caractérisé en ce que**
le corps cylindrique du manchon de calibrage (1) comporte au moins deux parties avec des conductibilités thermiques (λ1, À2, λ2') différentes.

10. Calibrateur à bloc (100) selon la revendication 9, dans lequel le manchon de calibrage (1) est réalisé selon l'une des revendications 1 à 9.

11. Calibrateur à bloc (100) selon la revendication 9 ou 10,
**caractérisé en ce que**
lorsqu'un manchon de calibrage (1) est inséré dans le trou de réception (21), la partie de calibrage (12) correspond à l'agencement du moyen chauffant (20) par rapport à la direction longitudinale (L).
